(19) Europäisches Patentamt
European Patent Office
Office européen des brevets

(11) **EP 0 998 633 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **F02P 5/152**, F02D 35/02, F02P 5/14, F02D 41/14

(21) Anmeldenummer: **99922084.1**

(22) Anmeldetag: **31.03.1999**

(86) Internationale Anmeldenummer:
**PCT/DE99/00982**

(87) Internationale Veröffentlichungsnummer:
**WO 99/051875 (14.10.1999 Gazette 1999/41)**

(54) **VORRICHTUNG ZUM UNTERDRÜCKEN VON MOTORKLOPFEN IN BRENNKRAFTMASCHINEN**

DEVICE FOR SUPPRESSING ENGINE KNOCKING IN INTERNAL COMBUSTION ENGINES

DISPOSITIF PERMETTANT DE SUPPRIMER LES COGNEMENTS DE MOTEURS A COMBUSTION INTERNE

(84) Benannte Vertragsstaaten:
**DE FR IT**

(30) Priorität: **03.04.1998 DE 19814938**

(43) Veröffentlichungstag der Anmeldung:
**10.05.2000 Patentblatt 2000/19**

(73) Patentinhaber: **ROBERT BOSCH GMBH**
**70442 Stuttgart (DE)**

(72) Erfinder:
• **TORNO, Oskar**
**D-71701 Schwieberdingen (DE)**
• **KLUTH, Carsten**
**D-70469 Stuttgart (DE)**
• **HAEMING, Werner**
**D-74861 Neudenau (DE)**
• **FRANKE, Steffen**
**Brentwood Essex CM14 5BT (GB)**
• **BAEUERLE, Michael**
**D-71706 Markgröningen (DE)**

(56) Entgegenhaltungen:
**US-A- 4 265 206**    **US-A- 4 586 474**
**US-A- 5 150 682**    **US-A- 5 373 448**

• **PATENT ABSTRACTS OF JAPAN vol. 014, no. 510 (M-1045), 8. November 1990 (1990-11-08) & JP 02 211381 A (HONDA MOTOR CO LTD), 22. August 1990 (1990-08-22)**

## Beschreibung

Stand der Technik

Die Erfindung geht aus von einer Vorrichtung zum Unterdrücken von Motorklopfen in Brennkraftmaschinen nach der Gattung des Hauptanspruchs. Aus der DE 3 420 465 C2 ist eine Vorrichtung zum Unterdrücken von Motorklopfen bekannt. Bei dieser bekannten Vorrichtung werden die Betriebsparameter der Brennkraftmaschine ermittelt und aufgrund dieser erfaßten Betriebsparameter werden in einer Steuereinheit die jeweiligen Stellgrößen für die zu steuernden Vorgänge wie Zündung und Einspritzung ermittelt. So wird beispielsweise anhand von Drehzahl und angreifender Last der optimale Zündzeitpunkt berechnet. Bei der bekannten Vorrichtung ist außerdem ein Klopfdetektor vorgesehen, der die Verbrennungsgeräusche zylinderindividuell erfaßt. Die Signal des Klopfdetektors werden an eine Klopfsignalausweiteschaltung weitergeleitet und dort nach dem Herausfiltern der Hintergrundgeräusche mit einem Referenzpegel verglichen. Wurde eine klopfende Verbrennung erkannt, so wird der anhand von Drehzahl und Last bestimmte Zündzeitpunkt in diesem Zylinder für eine Klopfunterdrückung in Richtung Spät und damit von der Klopfgrenze weg, verstellt. Nach einer vorgebbaren Anzahl klopffreier Verbrennungen wird dieser veränderte Zündzeitpunkt wieder schrittweise an die vom Steuergerät bestimmte Stellgröße herangeführt. Da die Gefahr von klopfenden Verbrennungen bei kaltem Motor nicht besteht, ist es üblich, die Klopfregelung erst ab dem Erreichen einer vorgebbaren Motortemperatur also nach dem Warmlauf der Brennkraftmaschine aktiv zu schalten. Unterhalb dieser Freigabetemperatur kann mit Sicherheit kein Klopfen auftreten, da die thermischen Verhältnisse im Brennraum dies nicht zulassen. Bei den bekannten Systemen wird zur Ermittlung der Motortemperatur die Kühlwassertemperatur erfaßt.

Vorteile der Erfindung

Die erfindungsgemäße Vorrichtung mit den kennzeichnenden Merkmalen des Hauptanspruchs, daß die Freigabe der Klopfregelung in Abhängigkeit der Gaseintrittstemperatur in den Brennraum erfolgt, hat gegenüber dem Bekannten den Vorteil, daß eine genaue Aussage über die tatsächlichen thermischen Verhältnisse im Brennraum ein zu frühes Zuschalten der Klopfregelung und damit unnötige bzw. fehlerhafte Eingriffe der Klopfregelung vermieden werden, wodurch sich wiederum eine Wirkungsgradverbesserung ergibt.
Durch die in den Unteransprüchen aufgeführten Maßnahmen sind vorteilhafte Weiterbildungen und Verbesserungen der im Hauptanspruch angegebenen Vorrichtung möglich.
Vorteilhafterweise ist es möglich, die Einlaßtemperatur aus einer Reihe von gemessenen Größen wie beispielsweise der Motor- und der Ansauglufttemperatur aus der Abgasrückführtemperatur, dem Luftmassestrom und der Abgasrückführungsrate nachzubilden. Hierbei sind keine zusätzlichen Sensoren notwendig, da diese Temperaturen bei modernen Steuergeräten bereits ohnehin erfaßt werden, wodurch diese Lösung besonders kostengünstig ist.
Eine zweite Möglichkeit besteht auch darin, direkt am Einlaßventil einen Temperaturfühler, der beispielsweise mit dem Einlaßventil konstruktiv verbunden sein kann, vorzusehen. Hier bietet sich die Möglichkeit, daß das Steuergerät keine zusätzliche Rechenkapazität benötigt.
Im Allgemeinen ist durch die direkte Erfassung der Gaseintrittstemperator oder durch die anhand eines Modells bestimmte Gaseintrittstemperatur die Möglichkeit gegeben, Störgeräusche aufgrund des noch kalten Motoröls und damit fälschlich erkanntes Klopfen auszuschließen. Damit wird keine ungerechtfertigte Zündwinkelspätverstellung aktiviert, was wiederum eine Erhöhung des Fahrkomforts und des Wirkungsgrades bedeutet.

Zeichnung

Ausführungsbeispiel der Erfindung sind in der Zeichnung dargestellt und in der nachfolgenden Beschreibung näher erläutert. Es zeigen Figur 1 ein prinzipielles Blockschaltbild für die erfindungsgemäße Vorrichtung und Figur 2 ein Blockschaltbild für die Ermittlungen der Gaseintrittstemperatur ohne Temperaturfühler im Brennraum und Figur 3 eine mögliche Anordnung eines Temperaturfühlers im Brennraum.

Beschreibung der Ausführungsbeispiele

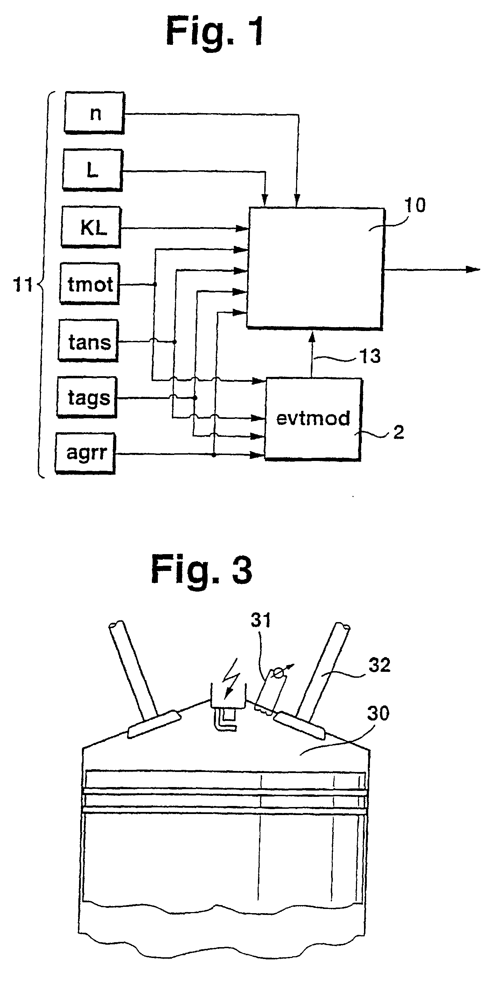

Figur 1 zeigt ein Blockschaltbild der Vorrichtung zur Durchführung des Verfahrens. Hierbei ist einer Steuereinheit 10 eine Reihe von Eingangssignalen 11, die die Betriebsbedingungen der Brennkraftmaschine charakterisieren und von nicht dargestellten Sensoren erfaßt werden, zugeführt. Die Steuereinheit 10 bestimmt an Hand des Drehzahlsignales n und des Lastsignales L den Zündzeitpunkt, welcher, wie bereits in der Beschreibungseinleitung gewürdigt, aus einem Kennfeld, welches sich über Last und Drehzahl spannt, entnommen wird. Desweiteren ist das Signal Kl des Klopfsensors der Steuereinheit 10 zugeführt, welche bei aktiver Klopfregelung ein Spätziehen des Zündzeitpunktes nach auftretendem Klopfen bewirkt. Die Klopfregelung selbst ist bereits Stand der Technik und als solche in der Beschreibungseinleitung gewürdigt, weshalb hier nicht nochmals detailliert darauf eingegangen werden soll.
In der Brennkraftmaschine werden für verschiedene weitere zu steuernde Vorgänge die Motortemperatur tmot (welche in der Regel die Temperatur des Kühlwassers darstellt), die Ansauglufttemperatur tans, die Abgasrückführtemperatur tags und die Abgasrückführrate agrr erfaßt. Bei bisherigen bekannten Steuereinheiten zum Steuern der Zündung einer Brennkraftmaschine wird die Klopfregelung in Abhängigkeit der Motortemperatur tmot, sobald sie eine vorgebbare Schwelle erreicht hatte, wobei als Motortemperatur die Kühlwassertemperatur erfaßt wurde, aktiv geschaltet. Bei modernen Steurergeräten werden ebenso wie beim erfindungsgemäßen Gegenstand neben der Motortemperatur tmot, die Luftmasse ml, die Ansauglufttemperatur tans, die Abgasrückführtemperatur tags und die Abgasrückführrate agrr erfaßt und zur Regelung verschiedener Vorgänge ausgewertet. Diese Temperaturen werden nun außerdem einem Arbeitsschritt 12 zur Berechnung der Gaseintrittstemperatur zugeführt. In dem Arbeitsschritt 12 wird die Gaseintrittstemperatur, im Folgenden mit evtmod (Einlaßventil Temperatur modelliert) bezeichnet, anhand eines Modells aus den erfaßten Größen nachgebildet. Die Gaseintrittstemperatur stellt die Temperatur des Brennraumluftgemisches am Einlaßventil in den Brennraum dar.

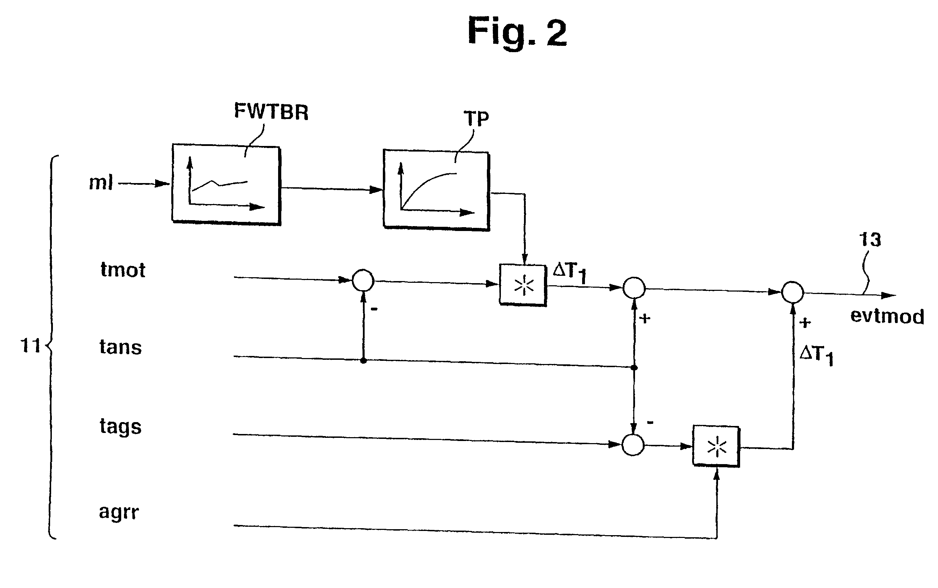

Im Folgenden soll an Hand von Figur 2 das Modell zur Bestimmung der Gaseintrittstemperatur evtmod aus den erfaßten Größen Luftmasse ml, Motortemperatur tmot, Ansauglufttemperatur tans, Abgasrückführtemperatur tagr und Abgasrückführrate agrr erläutert werden.

In Figur 2 ist im Modell der Zusammenhang zwischen den einzelnen erfaßten Daten dargestellt, wobei sich diese Zusammenhänge aufgrund der thermodynamischen Gesetzmäßiigkeiten ergeben. Die Ansauglufttemperatur tans ist die Temperatur der angesaugten Luft. Diese angesaugte Luft wird im Saugrohr durch die dort herrschende Motortemperatur tmot beeinflußt. Gleichzeitig ist die angesaugte Luftmenge ml zu berücksichtigen. So wird beispielsweise eine kleine Masse angesaugter Luft durch die wärmere Motortemperatur tmot wesentlich stärker erwärmt werden als eine große Masse angesaugter Luft. Die Luftmassenmenge wird im angegebenen Modell mit einem Wichtungsfaktor FWTBR berücksichtigt, wobei dieser Faktor FWTBR eine applizierbare Kennlinie über den Luftmassenstrom ist. Dieser Faktor FWTBR wird auf dem Motorprüfstand ermittelt, indem die mittels eines Sensors erfaßte Temperatur am Einlaßventil und die Ansauglufttemperatur über die verschiedenen möglichen Luftmassenströme erfaßt und zueinander ins Verhältnis gesetzt werden. Um den Luftmassenstrom auch bei Dynamik richtig bewerten zu können, wird die Größe für die angesaugte Luftmasse nach der Bewertung durch den Faktor FWTBR über einen Tiefpaß TP 1.Ordnung geführt. Hierbei wird berücksichtigt, daß bei einem Wechsel von einem zu einem anderen Betriebspunkt mit einem anderen Luftdurchsatz eine gewisse Zeit vergeht, bis sich wieder ein Temperaturgleichgewicht eingestellt hat. Die sich durch den Wärmeeintrag von seiten der Motortemperatur ergebende Temperaturerhöhung $\Delta T1$ ist proportional zum Wärmeeintrag selbst, so daß gilt: $\Delta T1 = FWTBR^{*}$ (tmot- tans).

Durch Mischung der Ansaugluft mit dem rückgeführten, wärmeren Abgas ergibt sich eine weitere Temperaturerhöhung, wobei dieser zweite Wärmeeintrag $\Delta T2$ sich aus der Abrasrückführrat agrr, die über die relative Abgasmasse definiert ist, und der Abgastemperatur tagr ergibt: $\Delta T2 = agrr ^{*} (tags - tans)$.

Geht man nun davon aus, daß beide Wärmekapazitäten $\Delta T1$ und $\Delta T2$ gleichwertig eingehen, ergibt sich die modellierte Temperatur evmod am Einspritzventil:

$$evmod = FWTBR^{*}(tmot - tans) + agrr^{*}(tags - tans)$$

Natürlich ist es auch möglich, die Gaseintrittstemperatur wie in Figur 3 schematisch gezeigt, im Brennraum 30 direkt mittels eines Temperaturfühlers 31, der in unmittelbarer Nähe eines Einlaßventils 32 angordnet ist oder möglicher Weise sogar im Einlaßventil konstruktiv integriert ist, zu erfassen.

## Patentansprüche

1. Vorrichtung zum Unterdrücken von Motorklopfen in einer Brennkraftmaschine mit Mitteln zur Erfassung der jeweiligen Betriebsparameter, mit einer Steuereinheit zur Bestimmung von Stellgrößen für die Einspritzung und Zündung auf Grund der erfaßten Parameter, mit mindestens einem Klopfsensor und einer Einrichtung zur Korrektur der Stellgrößen für die Zündung in der Art, daß die Zündsteuergröße bei einem erfaßten Klopfen zur Klopfunterdrückung von der Klopfgrenze wegverstellt wird und anschließend nach einer vorgebbaren Anzahl klopffreier Verbrennungen schrittweise wieder an die von der Steuereinheit bestimmte Stellgröße herangeführt wird und wobei diese Klopfregelung nur bei vorgebbaren thermischen Bedingungen der Brennkraftmaschine aktiv geschaltet ist, **dadurch gekennzeichnet, daß** zur Bewertung der aktuellen thermischen Bedingungen der Brennkraftmaschine die Gaseintrittstemperatur (evmod) in den Brennraum ermittelt wird.

2. Vorrichtung nach Anspruch 1, **dadurch gekennzeichnet, daß** die Gaseintrittstemperatur im Brennraum mittels eines Temperatursensors (31) im Brennraum, insbesondere in unmittelbarer Nähe des Einlaßventils ermittelt wird.

3. Vorrichtung nach Anspruch 1, **dadurch gekennzeichnet, daß** die Gaseintrittstemperatur (evmod) in den Brennraum mittels einer thermodynamischen Modellrechnung aus der Motortemperatur (tmot), der Ansauglufttemperatur (tans) und dem Luftmassenstrom (ml) bestimmt wird.

**4.** Vorrichtung nach Anspruch 3, **dadurch gekennzeichnet, daß** in der thermodynamischen Modellrechnung auch die Abgastemperatur (tags) und die Abgasrückführrate (agrr) mit berücksichtitgt sind.

## Claims

**1.** Device for suppressing engine knock in an internal combustion engine, having means for detecting the respective operating parameters, having a control unit for determining manipulated variables for injection and ignition on the basis of the detected parameters, having at least one knock sensor and a device for correcting the manipulated variables for ignition in such a way that, when a knock is detected, the ignition control variable is adjusted away from the knock limit for the purpose of knock suppression and is subsequently, after a prescribable number of knock-free instances of combustion, brought up again in steps to the manipulated variable determined by the control unit, and this knock control being switched to be active only in the case of prescribable thermal conditions of the internal combustion engine, **characterized in that** the gas inlet temperature (evmod) for the combustion chamber is determined by the purpose of evaluating the current thermal conditions of the internal combustion engine.

**2.** Device according to Claim 1, **characterized in that** the gas inlet temperature in the combustion chamber is determined by means of a temperature sensor (31) in the combustion chamber, in particular in the immediate vicinity of the inlet valve.

**3.** Device according to Claim 1, **characterized in that** the gas inlet temperature (evmod) for the combustion chamber is determined by means of a thermodynamic model calculation from the engine temperature (tmot), the induction-air temperature (tans) and the air mass flow (ml).

**4.** Device according to Claim 3, **characterized in that** account is also taken of the exhaust gas temperature (tags) and the exhaust gas recirculation rate (agrr) in the thermodynamic model calculation.

## Revendications

**1.** Dispositif pour éviter le cognement d'un moteur à combustion interne, comprenant des moyens de détection des paramètres de fonctionnement respectifs, une unité de commande pour déterminer les grandeurs de réglage de l'injection et de l'allumage à partir des paramètres saisis, au moins un capteur de cognement, et une installation pour corriger les grandeurs de réglage pour l'allumage de façon que les grandeurs de commande d'allumage soit écartées de la limite de cognement lorsqu'on détecte un cognement pour supprimer le cognement et ensuite, après un nombre prédéterminé de combustions sans cognement, on se rapproche pas à pas de la grandeur de réglage définie par l'unité de commande, ce réglage du cognement n'étant actif que dans des conditions thermiques prédéterminées du moteur à combustion interne, **caractérisé en ce que** pour évaluer les conditions thermiques actuelles du moteur à combustion interne, on détermine la température d'entrée des gaz (evmod) dans la chambre de combustion.

**2.** Dispositif selon la revendication 1, **caractérisé en ce qu'** on détermine la température d'entrée des gaz dans la chambre de combustion à l'aide d'un capteur de température (31) dans la chambre de combustion notamment installé à proximité immédiate de la soupape d'admission.

**3.** Dispositif selon la revendication 1, **caractérisé en ce qu'** on détermine la température d'admission des gaz (evmod) dans la chambre de combustion à l'aide d'un calcul de modèle thermodynamique à partir de la température du moteur (tmot), de la température de l'air aspiré (tans) et du débit massique d'air (ml).

**4.** Dispositif selon la revendication 3, **caractérisé en ce que** dans le calcul de modèle thermodynamique, on tient également compte de la température des gaz d'échappement (tags) et du taux de recyclage de gaz d'échappement (agrr).

# Fig. 1

# Fig. 3

# Fig. 2

EP 0 998 633 B1